# EUROPEAN PATENT SPECIFICATION

(11) **EP 2 827 676 B1**
(45) Date of publication and mention of the grant of the patent: **25.07.2018**
(21) Application number: 14168759.0
(22) Date of filing: 19.05.2014
(51) Int. Cl.: H04L 29/08, H04W 28/06

(54) **Wireless device, radio network node, methods therein, computer program and computer readable storage medium**
Drahtlose Vorrichtung, Funknetzwerkknoten, Verfahren darin, Computerprogramm und computerlesbares Speichermedium
Dispositif sans fil, noeud de réseau radio, procédés associés, programme informatique et support de stockage lisible par ordinateur

(30) Priority: 17.05.2013 US 201361824401 P
(43) Date of publication of application: 21.01.2015
(73) Proprietor: Telefonaktiebolaget LM Ericsson (publ), 164 83 Stockholm (SE)
(72) Inventor: Pradas, Jose Luis, 116 22 Stockholm (SE); Wallerius, Roger, 433 68 Sävedalen (SE); Jonsson, Anders, 187 35 Täby (SE)
(74) Representative: Zacco Sweden AB

(56) References cited:
- EP-A2- 1 990 944
- US-A1- 2008 089 285
- US-A1- 2008 186 946

## Description

### TECHNICAL FIELD

Embodiments relate to a wireless device, a radio network node, methods therein, a computer program, and a computer readable storage medium. In particular embodiments herein relate to transit a wireless device from one connected state, CELL_FACH state, to another connected state, CELL_DCH state, in a radio communications network.

### BACKGROUND

In a typical radio communications network, wireless devices, also known as mobile J stations and/or user equipments (UEs), communicate via a Radio Access Network (RAN) to one or more core networks (CN). The radio access network covers a geographical area which is divided into cell areas, with each cell area being served by a radio network node, e.g., a base station, a radio base station (RBS), which in some networks may also be called, for example, a "NodeB" or "eNodeB". A cell is a geographical area where radio coverage is provided by the radio base station at a base station site or an antenna site in case the antenna and the radio base station are not collocated. Each cell is identified by an identity within the local radio area, which is broadcast in the cell. Another identity identifying the cell uniquely in the whole mobile network is also broadcasted in the cell. One radio network node may have one or more cells. A cell may be a downlink and/or an uplink cell. The radio network nodes communicate over the air interface operating on radio frequencies with the wireless device within range of the radio network nodes.

A Universal Mobile Telecommunications System (UMTS) is a third generation radio communications network, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for wireless devices. In a forum known as the Third Generation Partnership Project (3GPP), telecommunications suppliers propose and agree upon standards for third generation networks and UTRAN specifically, and investigate enhanced data rate and radio capacity. In some versions of the RAN as e.g. in UMTS, several base stations may be connected, e.g., by landlines or microwave, to a controller node, such as a radio network controller (RNC) or a base station controller (BSC), which supervises and coordinates various activities of the plural base stations connected thereto. The RNCs are typically connected to one or more core networks.

Specifications for the Evolved Packet System (EPS) have been completed within the 3^{rd} Generation Partnership Project (3GPP) and this work continues in the coming 3GPP releases. The EPS comprises the Evolved Universal Terrestrial Radio Access Network (E-UTRAN), also known as the Long Term Evolution (LTE) radio access, and the Evolved Packet Core (EPC), also known as System Architecture Evolution (SAE) core network. E-UTRAN/LTE is a variant of a 3GPP radio access technology wherein the radio base stations are directly connected to the EPC core network rather than to RNCs. In general, in E-UTRAN/LTE the functions of a RNC are distributed between the radio base stations, e.g. eNodeBs in LTE, and the core network. As such, the Radio Access Network (RAN) of an EPS has an essentially "flat" architecture comprising radio base station without reporting to RNCs.

One of the cornerstones in the increased usage of smartphones is the ability of the Network (NW), e.g. a radio network node, to handle high volumes of bursty traffic. New Smartphone applications tend to require access to NW more often than before, with varying length of data and signaling sessions.

The wireless device may operate in several states depending on user activity. The following states have been defined for UMTS Terrestrial Radio Access (UTRA) radio resource control (RRC) connected mode: IDLE, CELL_DCH, CELL_FACH, URA_PCH, and CELL_PCH state.

IDLE mode: CN-level; wireless device is identified with a Temporary Mobile Subscriber Identity (TMSI).

RRC connected mode: UTRAN-level, wireless device is identified with a Cell-Radio Network Temporary Identifier (C-RNTI) and UTRAN-Radio Network Temporary Identifier (U-RNTI); Cell_FACH and Cell_PCH: every cell change needs to be reported via cell update; URA_PCH, every change needs to be reported via cell update.

From Release 7 and due to the introduction of enhanced features to improve CELL_FACH performance, CELL_FACH is considered the most convenient RRC connected mode to transmit small amount of bursty data traffic. However, the wireless device may still be up-switched to CELL_DCH state when, for example, the wireless device has more data to transmit or receive.

In order to minimize the delays and to improve the end-user perceived experience, the up-switch from CELL_FACH to CELL_DCH state requires the NW and the wireless device to support a fast and seamless transition.

From 3GPP Release 7, the Medium Access Control - enhanced high speed (MAC-ehs) entity may be configured by the NW to transmit downlink data in CELL_FACH state. Medium Access Control-high speed (MAC-hs) entity is a Medium Access Control (MAC) entity that handles the High Speed-Downlink Shared Channel (HS-DSCH) transport channel and the MAC-ehs entity facilitates multiplexing of data from multiple priority queues and supports higher downlink transmission rates. When the wireless device is moved from CELL_FACH to CELL_DCH state, the NW may also configure in CELL_DCH the MAC-ehs entity. In this case, MAC variables such as, for example, an initial Transmit Sequence Number (TSN) value of a packet needs to be the same in both the NW and the wireless device.

A Resource Block (RB) reconfiguration to move the wireless device from CELL_FACH to CELL_DCH may or may not include an Information element (IE) "MAC-hs reset indicator". Current specification, 3GPP TS 25.331 section 8.6.6, V11.5.0, Radio Resource Control (RRC); Protocol specification, describes an unspecified wireless device behavior when the wireless device receives the IE "MAC-hs reset indicator", the serving HS-DSCH radio link is the same as prior to the reconfiguration, and the MAC header type i.e. MAC entity is unchanged. Currently, 3GPP is working on a fix to change this behavior. Nevertheless, a MAC-ehs reset, which is indicated by receiving a MAC-hs reset indicator, may result in that data is lost if segmented MAC-ehs Service Data Units (SDU) are sent to the wireless device as these are stored and disregarded upon receiving a MAC-hs reset indicator.

On the other hand, the NW may choose to not include the "MAC-hs reset indicator" to achieve a seamless transition to CELL_DCH state. This means that no data loss should happen. However, at up-switch from the CELL_FACH to CELL_DCH state it is currently specified in the 3GPP standard, that TSN should be set to zero. This does not ensure a seamless transition to CELL_DCH state since the radio network node then would transmit the next packet or protocol data unit (PDU) resulting in a reduced performance of the radio communications network as data would be lost.

The document EP 1 990 944 A2 (INNOVATIVE SONIC LTD [VG]) 12 November 2008 (2008-11-12) discloses a scheme to avoid the incorrect concatenation of higher-layer PDUs, involving the initial storage of a MAC-ehs SDU segment and the separate options of joining it to another received MAC-ehs SDU segment or of discarding the first MAC-ehs SDU segment upon the reception of the second segment.

### SUMMARY

An object of embodiments herein is to provide a mechanism that improves the performance of a radio communications network.

According to an aspect the object is achieved by a method in a wireless device for handling packets from a radio network node in a radio communications network. A seamless transition of a switch from a CELL_FACH state of the wireless device to a CELL_DCH state of the wireless device is provided. The wireless device stores a segmented MAC-ehs SDU, received from the radio network node when the wireless device is in the CELL_FACH state. The wireless device receives another MAC-ehs SDU in an initial transmission when the wireless device is in the CELL_DCH state. The wireless device joins the stored segmented MAC-ehs SDU with the received other MAC-ehs SDU. Alternatively, the wireless device discards the stored segmented MAC-ehs SDU when the received other MAC-ehs SDU comprises a segmentation indication indicating the received other MAC-ehs SDU to be a beginning of a reordering protocol data unit, PDU or a complete MAC-ehs SDU.

According to another aspect the object is achieved by a method in a radio network node for handling packets towards a wireless device in a radio communications network. A seamless transition of a switch from a CELL_FACH state of the wireless device to a CELL_DCH state of the wireless device is provided. The radio network node stores a segmented MAC-ehs SDU, at least partially transmitted to the wireless device in CELL_FACH state. The radio network node retransmits the stored segmented MAC-ehs SDU to the wireless terminal in CELL_DCH state when a complete MAC-ehs SDU is partially transmitted to the wireless device in CELL_FACH state. Alternatively, the radio network node transmits to the wireless terminal in CELL_DCH state, another segmented MAC-ehs SDU remaining in a sequence of segmented MAC-ehs SDUs with a transmission sequence number.

According to yet another aspect the object is achieved by a wireless device for handling packets from a radio network node in a radio communications network, providing a seamless transition of a switch from a CELL_FACH state of the wireless device to a CELL_DCH state of the wireless device. The wireless device is configured to store a segmented MAC-ehs SDU, received from the radio network node when the wireless device is in the CELL_FACH state. The wireless device is configured to receive another MAC-ehs SDU in an initial transmission when the wireless device is in the CELL_DCH state, and the wireless device is configured to join the stored segmented MAC-ehs SDU with the received other MAC-ehs SDU; or to discard the stored segmented MAC-ehs SDU when the received other MAC-ehs SDU comprises a segmentation indication indicating the received other MAC-ehs SDU to be a beginning of a reordering PDU or a complete MAC-ehs SDU.

According to still another aspect the object is achieved by a radio network node for handling packets towards a wireless device in a radio communications network to provide a seamless transition of a switch from a CELL_FACH state of the wireless device to a CELL_DCH state of the wireless device. The radio network node is configured to store a segmented MAC-ehs SDU, at least partially transmitted to the wireless device in CELL_FACH state. The radio network node is further configured to retransmit the stored segmented MAC-ehs SDU to the wireless terminal in CELL_DCH state when a complete MAC-ehs SDU is partially transmitted to the wireless device in CELL_FACH state, or to transmit, to the wireless terminal in CELL_DCH state, another segmented MAC-ehs SDU remaining in a sequence of segmented MAC-ehs SDUs with a transmission sequence number.

Furthermore, a computer program, comprising instructions which, when executed on at least one processor, cause the at least one processor to carry out the methods herein is provided, and a computer-readable storage medium, having stored thereon a computer program, comprising instructions which, when executed on at least one processor, cause the at least one processor to carry out the methods herein is also provided.

An advantage of embodiments herein is to facilitate a seamless switch, or up-switch, from CELL_FACH to CELL_DCH in case MAC-ehs SDUs are segmented, improving the performance of the radio communications network. Seamless herein meaning no data interruptions or data losses.

### BRIEF DESCRIPTION OF THE DRAWINGS

Embodiments will now be described in more detail in relation to the enclosed drawings, in which:
Fig. 1 shows a schematic overview depicting a radio communications network according to embodiments herein;
Fig. 2 shows a combined flow chart and signalling scheme according to embodiments herein.
Fig. 3 shows a combined flow chart and signalling scheme according to embodiments herein.
Fig. 4 shows a combined flow chart and signalling scheme according to embodiments herein.
Fig. 5 shows a flow chart depicting a method in a wireless device according to embodiments herein.
Fig. 6 shows a flow chart depicting a method in a radio network node according to embodiments herein.
Fig. 7 shows a block diagram depicting a wireless device according to embodiments herein.
Fig. 8 shows a block diagram depicting a radio network node according to embodiments herein.
Fig. 9 shows a block diagram depicting a wireless device according to embodiments herein.
Fig. 10 shows a block diagram depicting a radio network node according to embodiments herein.

### DETAILED DESCRIPTION

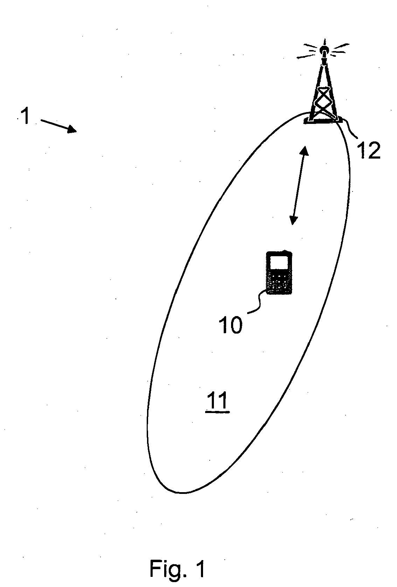

Embodiments herein relate to wireless communication networks in general. **Fig. 1** is a schematic overview depicting **a radio communications network 1,** also referred to as wireless communication network. The radio communications network 1 comprises one or more RANs and one or more CNs. The radio communications network 1 may use a number of different technologies, such as Long Term Evolution (LTE), LTE-Advanced, Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible implementations. The radio communications network 1 is exemplified herein as an LTE network.

In the radio communications network 1, a **wireless device 10,** also known as a mobile station, a user equipment and/or a wireless terminal, communicates e.g. via a Radio Access Network (RAN) to one or more core networks (CN). It should be understood by the skilled in the art that "wireless device" is a non-limiting term which means any wireless terminal, user equipment, Machine Type Communication (MTC) device, a Device to Device (D2D) terminal, or node e.g. Personal Digital Assistant (PDA), laptop, mobile phone, sensor, relay, mobile tablets or even a small base station communicating within respective cell.

The radio communications network 1 covers a geographical area which is divided into cell areas, e.g. **a cell 11** being served by **a radio network node 12.** The radio network node 12 may also be referred to as a radio base station, first radio base station and e.g. a NodeB, an evolved Node B (eNB, eNode B), a base transceiver station, Access Point Base Station, base station router, or any other network unit capable of communicating with a user equipment within the cell served by the radio base station depending e.g. on the radio access technology and terminology used. The radio network node 12 may serve one or more cells, such as the cell 11. In some versions of the RAN as e.g. in UMTS, several base stations may be connected, e.g., by landlines or microwave, to a controller node, such as a radio network controller (RNC) or a base station controller (BSC), which supervises and coordinates various activities of the plural base stations connected thereto. RNC is another example of the radio network node 12. Embodiments herein relate to the wireless device 10, the radio network node 12, such as a radio base station or an RNC, and methods therein. The radio network node 12 is also referred to herein as Network (NW).

A cell is a geographical area where radio coverage is provided by radio base station equipment at a base station site or at remote locations in Remote Radio Units (RRU). The cell definition may also incorporate frequency bands and radio access technology used for transmissions, which means that two different cells may cover the same geographical area but using different frequency bands. Each cell is identified by an identity within the local radio area, which is broadcast in the cell. Another identity identifying the cell 11 uniquely in the whole wireless communication network 1 is also broadcasted in the cell 11. The radio network node 12 communicates over the air or radio interface operating on radio frequencies with the wireless device 10 within range of the radio network node 12. The wireless device 10 transmits data over the radio interface to the radio network node 12 in Uplink (UL) transmissions and the radio network node 12 transmits data over an air or radio interface to the wireless device 10 in Downlink (DL) transmissions.

As stated above the wireless device 10 may be RRC connected, RRC is terminated in an RNC in UMTS and in an eNB in LTE, in different states. E.g. the wireless device 10 may initially be RRC connected in a CELL_FACH state and is to change from Cell_FACH state to CELL_DCH state, e.g. got a lot of data for transmission or reception. That is, the wireless device 10 goes from one RRC connected state, CELL_FACH state, to another RRC connected state, CELL_DCH state.

Embodiments herein disclose different ways to facilitate a seamless up-switch with or without utilizing a MAC-ehs reset. When MAC-ehs is configured, a MAC PDU for HS-DSCH comprises one MAC-ehs header and one or more reordering PDUs. Each reordering PDU comprises one or more reordering SDUs belonging to the same priority queue. All reordering SDUs belonging to the same priority queue in one TTI shall be mapped to the same reordering PDU. Each reordering SDU equals a complete MAC-ehs SDU or a segment of a MAC-ehs SDU, also referred to herein as segmented MAC-ehs SDU..

A TSN field provides an identifier for the transmission sequence number on the HS-DSCH. The TSN field is used for reordering purposes to support in-sequence delivery to higher layers.

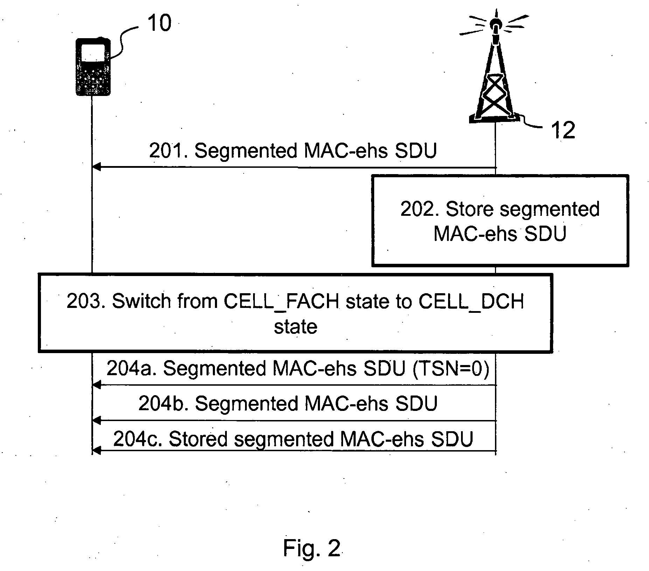

**Fig. 2** shows a combined flowchart and signaling scheme according to some embodiments herein. The actions do not have to be taken in the order stated below, but may be taken in any suitable order with a focus on the radio network node behavior.
**Action 201.** The radio network node 12 sends one or more segmented MAC-ehs SDUs to the wireless device 10 in CELL_FACH state.
**Action 202.** The radio network node 12 stores the one or more segmented MAC-ehs SDUs sent to the wireless device 10 in CELL_FACH state.
**Action 203.** The wireless device 10 changes state to CELL_DCH state, i.e. switches from a CELL_FACH state to a CELL_DCH state ordered e.g. from the radio network node 12 such as a RNC in UMTS or an eNB in LTE. In some embodiments the wireless device 10 may retain segmented MAC-ehs SDUs, the wireless device 10 may also retain the TSN numbering at up-switch from CELL_FACH to CELL_DCH and not perform a MAC-ehs reset.
**Action 204a.** The radio network node 12 may in some embodiments continue to transmit a next segmented MAC-ehs SDU but with TSN=0.
**Action 204b.** the radio network node 12 may alternatively continue to transmit the next segmented MAC-ehs SDU with the sequential TSN from the CELL_FACH state.
**Action 204c.** The radio network node 12 may alternatively retransmit the stored segmented MAC-ehs SDUs, or the whole or full MAC-ehs SDU or reordering PDU, in a first transmission on CELL_DCH state and with a first segmented MAC-ehs SDU with TSN=0 or with a first and middle segmented MAC-ehs SDUs with TSN=0.

All these embodiments avoid losing data when switching from CELL-FACH state to CELL_DCH state, thereby facilitating or providing a seamless switch for the wireless device 10 from the CELL-FACH state to the CELL_DCH state.

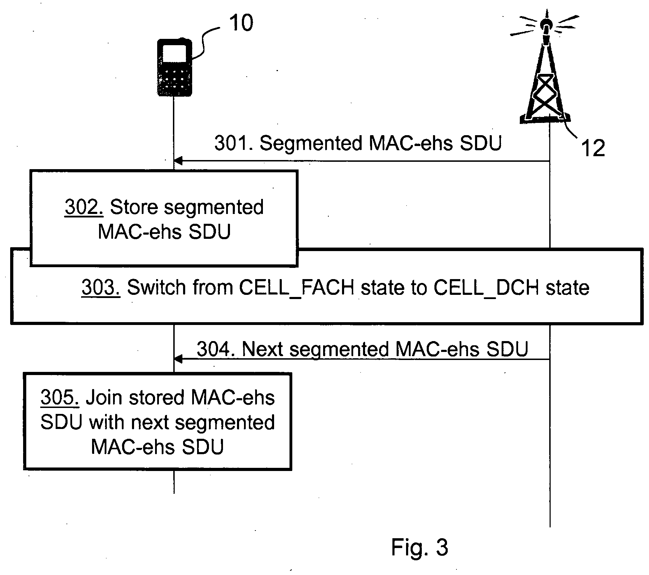

**Fig. 3** shows a combined flowchart and signaling scheme depicting some embodiments herein. The actions do not have to be taken in the order stated below, but may be taken in any suitable order.
**Action 301.** The radio network node 12 sends one or more segmented MAC-ehs SDUs to the wireless device 10 in CELL_FACH state. This action corresponds to action 201 in Fig. 2.
**Action 302.** The wireless device 10 stores the received one or more segmented MAC-ehs SDUs.
**Action 303.** The wireless device 10 changes to the CELL_DCH state, i.e. switches from a CELL_FACH state to a CELL_DCH state. This action corresponds to action 203 in Fig. 2.
**Action 304.** The radio network node 12 transmits a next segmented MAC-ehs SDU to the wireless device 10 in CELL_DCH state. The next segmented MAC-ehs SDU is in sequence from the segmented MAC-ehs SDU previously transmitted to the wireless device 10 in the CELL_FACH state. The next segmented MAC-ehs SDU may have a TSN as in the CELL_FACH state or the TSN set to zero. This action corresponds to actions 204a and 204b in Fig. 2.
**Action 305.** The wireless device 10 may then join the stored one or more segmented MAC-ehs SDUs with the received next segmented MAC-ehs SDU.

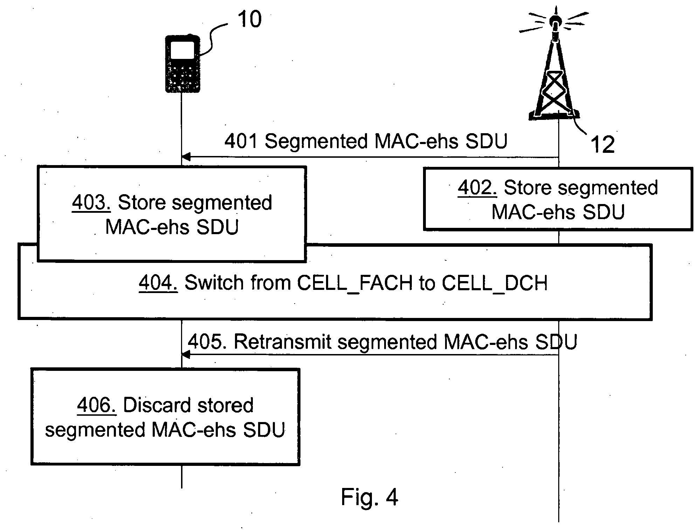

**Fig. 4** shows a combined flowchart and signaling scheme depicting some embodiments herein. The actions do not have to be taken in the order stated below, but may be taken in any suitable order.
**Action 401.** The radio network node 12 sends one or more segmented MAC-ehs SDUs to the wireless device 10 in CELL_FACH state. This action corresponds to actions 201 and 301 above.
**Action 402.** The radio network node 12 stores the one or more segmented MAC-ehs SDUs sent to the wireless device 10 in CELL_FACH state. This action corresponds to action 202 above.
**Action 403.** The wireless device 10 stores the received one or more segmented MAC-ehs SDUs. This action corresponds to action 302 above.
**Action 404.** The wireless device 10 changes to the CELL_DCH state, i.e. switches from a CELL_FACH state to a CELL_DCH state. This action corresponds to actions 203 and 303 above.
**Action 405.** The radio network node 12 may retransmit the stored segmented MAC-ehs SDUs, or the whole or full MAC-ehs SDU or reordering PDU, in a first transmission on CELL_DCH state and with a first segmented MAC-ehs SDU with TSN=0 or with a first and middle segmented MAC-ehs SDUs with TSN=0. This action corresponds to action 204c above.
**Action 406.** The wireless device 10 may then discard the stored segmented MAC-ehs SDU when the received other MAC-ehs SDU comprises a segmentation indication indicating the received other MAC-ehs SDU to be a beginning of a reordering PDU or a complete MAC-ehs SDU. Note that wireless device discards this data implicitly without receiving any explicit signaling such as a MAC-ehs reset indication". If the wireless device 10 has missed any segmented MAC-ehs SDU in CELL_FACH state it will receive the missed segmented MAC-ehs SDU in the retransmission.

Thus, as stated above, according to some embodiments herein the wireless device 10 provides packets in the form of MAC-ehs SDUs, also known as complete MAC-ehs SDUs, to higher layers before and during the change or switch of states. The wireless device 10 stores a segmented MAC-ehs SDU that cannot be delivered to higher layers at the switch of the wireless device 10 from a CELL_FACH state to a CELL_DCH state. The wireless device 10 may then receive a MAC-ehs SDU segment, also known as a segmented MAC-ehs SDU, in a first data transmission in the CELL_DCH state, and may further, according to some embodiments, join the received MAC-ehs SDU segment and the stored segmented MAC-ehs SDU.

According to some embodiments herein, for the case a MAC-hs reset indicator is not sent three different embodiments are disclosed:
- The wireless device 10, upon a reconfiguration, may deliver MAC-ehs reordering Packets or SDUs or Protocol Data Units to upper layers. This means that the DL data that was received in the wireless device 10 before up-switch is acted upon directly without any delay. The wireless device 10 doesn't have to wait to deliver data to the upper layers but may deliver complete MAC-ehs SDUs forming MAC-ehs reordering PDUs directly to the upper layers. In case of not complete segmented MAC-ehs SDUs, these are stored and not delivered;
- The wireless device 10 may avoid losing DL data by retaining or storing any unresolved segmented MAC-ehs SDUs, see action 302 and 403 above, and make a new reassembly attempt after up-switch to CELL_DCH state together with usage of continuous TSN, see action 305 above. Consequently, the wireless device 10 may store one or more of the last received segmented MAC-ehs SDU, received in CELL_FACH state, and join this or these with the one or more remaining MAC-ehs SDU segments which the radio network node 12 will send in the next in sequence TSN;
- In case TSN=0 is used as a first Sequence Number (SN) on CELL_DCH state after up-switch, erroneous re-assembly of MAC-ehs reordering PDUs or MAC-ehs SDUs, comprising the segmented MAC-ehs SDUs, by the wireless device 10 may be avoided if the radio network node 12 retransmits a whole new copy of the last transmitted MAC-ehs SDUs, if segmentation occurred, see action 204c and 405.

For the case MAC-hs reset indicator is sent there an embodiment is disclosed:
- The wireless device 10 retains legacy MAC-ehs reset behavior and discards on CELL_FACH state partially received MAC-ehs reordering SDUs or MAC-ehs SDUs in conjunction with the reset procedure. The seamless up-switch is then facilitated in that the radio network node 12 on CELL_DCH state resends a new complete copy of the segmented MAC-ehs SDU(s) on CELL_FACH state, see action 204c and action 405.

Hence, in order to facilitate a seamless up-switch without utilizing MAC-ehs reset, i.e. no MAC-hs reset indicator is sent to wireless device 10, three embodiments are disclosed herein and further described below.

### First embodiment:

The radio network node 12 may pause the transmission of MAC-ehs SDUs when changing the state of the wireless device 10. Furthermore, the radio network node 12 may detect missing segmented MAC-ehs SDUs, not received segmented MAC-ehs SDU packets, at the wireless device 10. The up-switch procedure is updated to mandate that the wireless device 10 shall retain segmented MAC-ehs SDU's that cannot be delivered to higher layers at up-switch from CELL_FACH to CELL_DCH and that the wireless device 10 shall expect to receive any missing MAC-ehs SDU segment in the first data transmission on CELL_DCH. This embodiment does not require a change in the current standard , section 11.6.4.5.1 in 3GPP TS 25.321 V11.3.0, Medium Access Control (MAC) protocol specification, which mandates that first transmission on CELL_DCH shall have TSN=0, see actions 204a, 304 above and 603 below. However, the wireless device 10 cannot detect if there are missing TSN, i.e. if the radio network node 12 has sent more data on CELL_FACH which were not detected by the wireless device 10 prior to the up-switch to CELL-DCH and TSN=0.

### Second embodiment:

In another embodiment, the MAC-ehs reset procedure, as mandated in 3GPP TS 25.321 V11.3.0, Medium Access Control (MAC) protocol specification, is not affected but instead requires that the standard is changed to mandate a modified wireless device behaviour in that the wireless device 10 in addition to retaining segmented MAC-ehs SDUs, shall also retain the TSN numbering at up-switch from CELL_FACH to CELL_DCH and not perform a MAC-ehs reset. The wireless device 10 may then receive the segmented MAC-ehs SDUs in sequence, see action 204b, 304 above and 603 below. In comparison to the embodiment relying on a MAC-ehs reset and setting TSN=0 that may end up in an erroneously reassemble of the data contained in TSN=0 with the wrong MAC-ehs SDU segment sent on CELL_FACH prior to the up-switch, this embodiment has the advantage that the wireless device 10 can detect if there are missing TSN, and thereby avoid doing the erroneous reassembly of segmented MAC-ehs SDUs that are not in sequence. Consequently, if TSN's are missing, this will then lead to Radio Link Control (RLC) retransmissions which is preferable to the re-assembly of corrupt RLC PDUs which will be the result if segments from not in sequence segmented MAC-ehs SDUs are joined.

### Third embodiment:

In this solution, the radio network node 12 retains a copy of any on CELL_FACH partially sent MAC-ehs SDU, also known as segmented MAC-ehs SDU, and initiates transmissions on CELL_DCH with TSN=0 by retransmitting either the whole or, in case this cannot be done, the beginning of the un-segmented reordering PDU, see action 204c, 405 above and 602 below. This ensures that the transition will be seamless even if the wireless device 10 discards last segmented MAC-ehs SDU or reordering PDU because the radio network node 12 resends the whole MAC-ehs SDU or reordering PDU as part of the new transmissions on CELL_DCH. Each reordering PDU comprises one or more reordering SDUs belonging to the same priority queue. Note that the wireless device 10 will also not attempt to join this with any previous segmented MAC-ehs SDU sent on CELL_FACH because radio network node 12 may send a Segmentation Indicator (SI) value indicating that TSN=0 and contains the beginning of a new reordering PDU or a complete MAC-ehs SDU. This would provide a seamless up-switch with no risk of erroneous MAC-ehs SDU reassembly, also referred to as reordering PDU corruption. Also note that this embodiment like for the second embodiment above handles lost TSN's in an efficient manner since if TSNs are missing, this will then only lead to an RLC retransmissions which is preferable to the re-assembly of a corrupt RLC PDU which would be the result if segments from not in sequence MAC-ehs SDUs are joined. The radio network node 12 will then always be obliged to transmit more data than if the TSN was retained since the wireless device 10 will always discard the last segmented MAC-ehs SDU as part of the up-switch procedure and the radio network node 12 would consequently be forced to retransmit this in TSN=0 to facilitate the seamless up-switch. It should be noted that a SI field indicates if the MAC-ehs SDU has been segmented by indicating the beginning of a new reordering PDU or being a complete MAC-ehs SDU. For example, value '00' indicates that a first reordering SDU of the reordering PDU is a complete MAC-ehs SDU, and that a last reordering SDU of the reordering PDU is a complete MAC-ehs SDU. Value '01' may indicate that if there are more than one reordering SDUs in the reordering PDU, the last reordering SDU of the reordering PDU is a complete MAC-ehs SDU, and that the first reordering SDU of the reordering PDU is the last segment of a MAC-ehs SDU. Value '10' may indicate that if there are more than one reordering SDUs in the reordering PDU, the first reordering SDU of the reordering PDU is a complete MAC-ehs SDU, and that the last reordering SDU of the reordering PDU is the first segment of a MAC-ehs SDU. Value '11' may indicate that if there are more than one reordering SDUs in the reordering PDU, the first reordering SDU of the reordering PDU is the last segment of a MAC-ehs SDU and the last reordering SDU of reordering PDU is the first segment of a MAC-ehs SDU.

If there is only one reordering SDU in the reordering PDU, the reordering SDU is a middle segment of a MAC-ehs SDU.

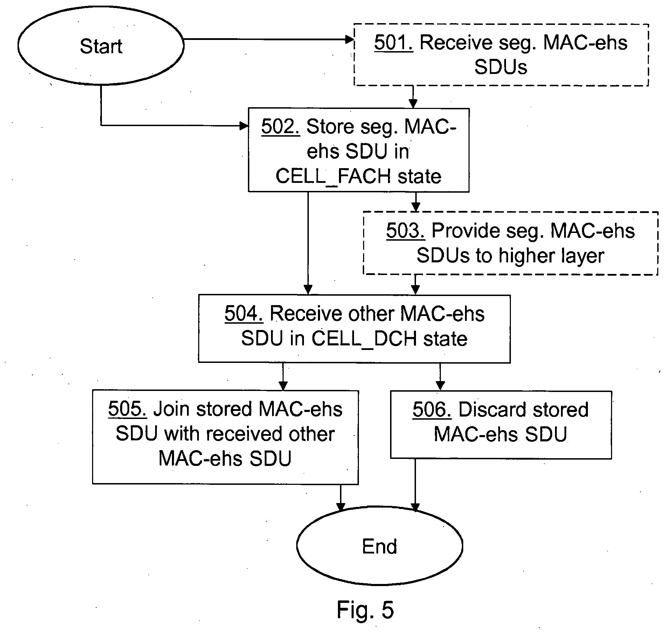

The method actions in the wireless device 10 for handling packets from the radio network node 12 in a radio communications network 1 providing a seamless transition of a switch from a CELL_FACH state of the wireless device 10 to a CELL_DCH state of the wireless device 10 according to some embodiments will now be described with reference to a flowchart depicted in Fig. 5. The actions do not have to be taken in the order stated below, but may be taken in any suitable order. Actions performed in some embodiments are marked with dashed boxes. The MAC-ehs entity in the wireless device 10 as well as in the radio network node 12 may be used prior to the up-switch and after the up-switch and the serving cell is not changed.
**Action 501.** The wireless device 10 may receive one or more segmented MAC-ehs SDUs from the radio network node 12 in CELL_FACH state.
**Action 502.** The wireless device 10 stores a segmented MAC-ehs SDU received from the radio network node 12 when the wireless device 10 is in the CELL_FACH state. For example, the wireless device 10 may retain the segmented MAC-ehs SDU that cannot be delivered to a higher layer during the switch from the CELL_FACH state to the CELL_DCH state.
**Action 503.** The wireless device 10 may provide the complete MAC-ehs SDU's comprising the one or more received segmented MAC-ehs SDUs as a complete MAC-ehs SDU to a higher layer during the switch to the CELL_DCH state.
**Action 504.** The wireless device 10 receives another MAC-ehs SDU in an initial transmission when the wireless device 10 is in the CELL_DCH state. The received other MAC-ehs SDU may be a segmented MAC-ehs SDU.
**Action 505.** The wireless device 10 may join the stored segmented MAC-ehs SDU with the received other MAC-ehs SDU. E.g. the wireless device 10 may join the stored segmented MAC-ehs SDU with the received other MAC-ehs SDU when a transmit sequence number of the received other MAC-ehs SDU is a sequential transmit sequence number of a transmit sequence number of the stored segmented MAC-ehs SDU. Alternatively, the wireless device 10 may join the stored segmented MAC-ehs SDU with the received other MAC-ehs SDU when a transmit sequence number of the received other MAC-ehs SDU is zero.
**Action 506.** The wireless device 10 may alternatively discard the stored segmented MAC-ehs SDU when the received other MAC-ehs SDU comprises a segmentation indication indicating the received other MAC-ehs SDU to be a beginning of a reordering PDU or a complete MAC-ehs SDU. Note that wireless device discards this data implicitly without receiving any explicit signaling such as a MAC-ehs reset indication. The wireless device 10 may alternatively perform a MAC-ehs reset at the switch at a reception of a reset indication from the radio network node 12. The MAC-ehs reset comprises removing the stored segmented MAC-ehs SDU after receiving the reset indication from the radio network node 12.

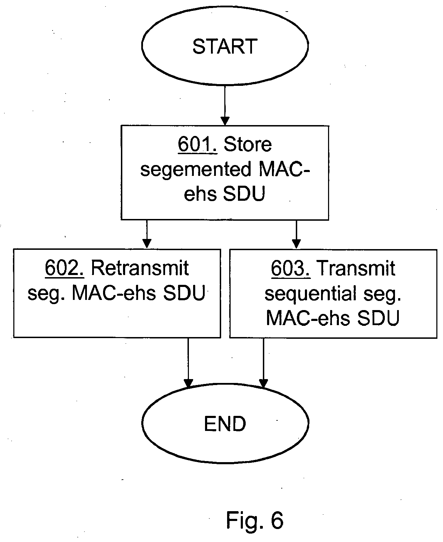

The method actions in the radio network node 12 for handling packets towards the wireless device 10 in the radio communications network 1 providing a seamless transition of a switch from a CELL_FACH state of the wireless device 10 to a CELL_DCH state of the wireless device 10 according to some embodiments will now be described with reference to a flowchart depicted in **Fig. 6****.** The actions do not have to be taken in the order stated below, but may be taken in any suitable order. Actions performed in some embodiments are marked with dashed boxes.
**Action 601.** The radio network node 12 stores a segmented MAC-ehs SDU at least partially transmitted to the wireless device 10 in CELL_FACH state.
**Action 602.** The radio network node 12 may in some embodiments retransmit the stored segmented MAC-ehs SDU to the wireless terminal 10 in CELL_DCH state when a complete MAC-ehs SDU is partially transmitted, i.e. not all segmented MAC-ehs SDUs of the complete MAC-ehs SDU is transmitted, to the wireless device 10 in CELL_FACH state. This may be performed after a MAC-ehs reset is sent to the wireless device 10.
**Action 603.** The radio network node 12 may in some alternative embodiments transmit to the wireless terminal 10 in CELL_DCH state, another segmented MAC-ehs SDU remaining in a sequence of segmented MAC-ehs SDUs with a transmission sequence number. The transmission sequence number may be zero or the transmission sequence number may be a sequential number to a number of a transmission sequence number of the stored segmented MAC-ehs SDU in the CELL_FACH state.

In order to facilitate a seamless up-switch utilizing MAC-hs reset indicator being an MAC-ehs reset procedure, embodiments are disclosed herein and further described below.

The wireless device 10 may at the up-switch from CELL_FACH perform a MAC-ehs reset as indicated by the radio network node 12 and the radio network node 12 may resume transmissions on CELL_DCH with TSN=0. The wireless device 10 may retain the legacy MAC-ehs reset behavior and discard the last segmented MAC-ehs SDU which could not be delivered to the higher layers. In order to provide the seamless up-switch, the radio network node 12 may retain a copy of the last segmented MAC-ehs SDU partially sent on CELL_FACH and retransmit this in the initial TSN=0 transmission on CELL_DCH. The radio network node 12 may retain a copy of any on CELL_FACH partially sent MAC-ehs SDU and initiate transmissions on CELL_DCH with TSN=0 by retransmitting either the whole or, in case this cannot be done, the beginning of the un-segmented reordering PDU. Note that the NW in this case should send an MAC-hs reset indicator at transitions from CELL_FACH to CELL_DCH and that the wireless device 10 in turn should comply by performing a MAC-ehs reset procedure under these conditions.

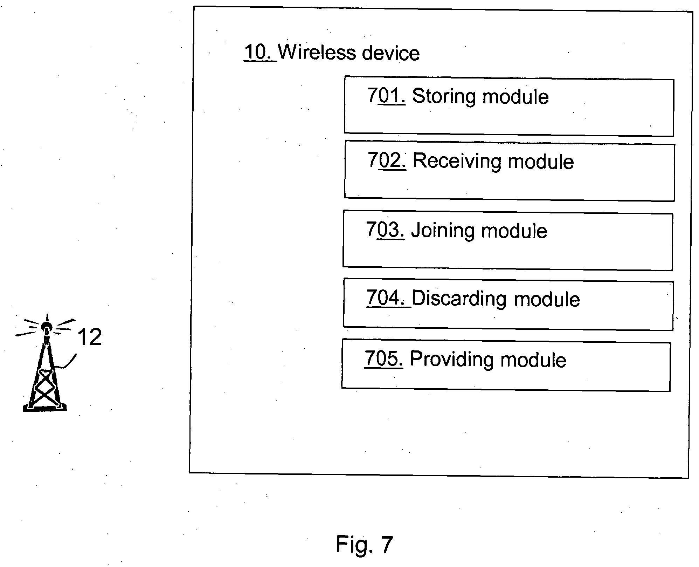

**Fig. 7** is a block diagram depicting the wireless device 10 for handling packets from the radio network node 12 in the radio communications network 1 providing a seamless transition of a switch from a CELL_FACH state of the wireless device 10 to a CELL_DCH state of the wireless device 10.

The wireless device 10 may comprise **a storing module 701.** The wireless device 10 and/or the storing module may be configured to store a segmented MAC-ehs SDU received from the radio network node 12 when the wireless device 10 is in the CELL_FACH state. The wireless device 10 and/or the storing module 701 may further be configured to store the segmented MAC-ehs SDU that cannot be delivered to a higher layer during the switch from the CELL_FACH state to the CELL_DCH state.

The wireless device 10 may comprise **a receiving module 702.** The wireless device 10 and/or the receiving module 702 may be configured to receive another MAC-ehs SDU in an initial transmission when the wireless device 10 is in the CELL_DCH state. The received other MAC-ehs SDU may be a segmented MAC-ehs SDU.

The wireless device 10 may further comprise **a joining module 703.** The wireless device 10 and/or the joining module 703 may be configured to join the stored segmented MAC-ehs SDU with the received other MAC-ehs SDU. The wireless device 10 and/or the joining module 703 may be configured to join the stored segmented MAC-ehs SDU with the received other MAC-ehs SDU when a transmit sequence number of the received other MAC-ehs SDU is a sequential transmit sequence number of a transmit sequence number of the stored segmented MAC-ehs SDU. The wireless device 10 and/or the joining module 703 may be configured to join the stored segmented MAC-ehs SDU with the received other MAC-ehs SDU when a transmit sequence number of the received other MAC-ehs SDU is zero.

Additionally or alternatively, the wireless device 12 may comprise **a discarding module 704.** The wireless device 10 and/or the discarding module 704 may be configured to discard the stored segmented MAC-ehs SDU when the received other MAC-ehs SDU comprises a segmentation indication indicating the received other MAC-ehs SDU to be a beginning of a reordering PDU or a complete MAC-ehs SDU.

The wireless device 10 and/or the receiving module 702 may be configured to receive one or more segmented MAC-ehs SDUs from the radio network node 12 in CELL_FACH state. The wireless device 10 may further comprise **a providing module 705.** The wireless device 10 and/the providing module 705 may be configured to provide the one or more received segmented MAC-ehs SDUs as a complete MAC-ehs SDU to a higher layer during the switch to the CELL_DCH state.

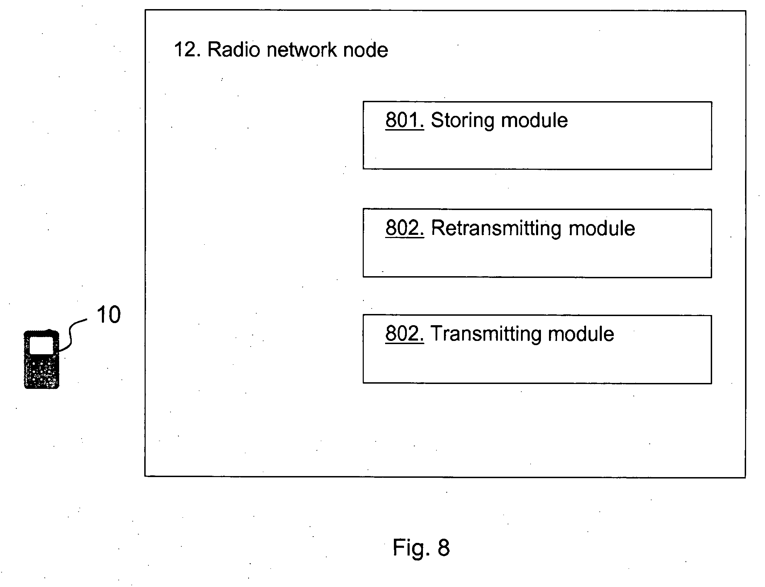

**Fig. 8** is a block diagram depicting the radio network node 12 for handling packets towards the wireless device 10 in the radio communications network 1 to provide a seamless transition of a switch from a CELL_FACH state of the wireless device 10 to a CELL_DCH state of the wireless device 10.

The radio network node 12 may comprises **a storing module 801.** The radio network node 12 and/or the storing module 801 is configured to store a segmented MAC-ehs SDU, at least partially transmitted to the wireless device 10 in CELL_FACH state.

The radio network node 12 may comprise **a retransmitting module 802.** The radio network node 12 and/or the retransmitting module 802 may be configured to retransmit the stored segmented MAC-ehs SDU to the wireless terminal 10 in CELL_DCH state when a complete MAC-ehs SDU is partially transmitted to the wireless device 10 in CELL_FACH state. The radio network node 12 and/or the retransmitting module 802 may be configured to retransmit the stored segmented MAC-ehs SDU after a MAC-ehs reset is sent to the wireless device.

The radio network node 12 may further comprise **a transmitting module 803.** The radio network node 12 and/or the transmitting module 803 may be configured to transmit, to the wireless terminal 10 in CELL_DCH state, another segmented MAC-ehs SDU remaining in a sequence of segmented MAC-ehs SDUs with a transmission sequence number. The radio network node 12 and/or the transmitting module 803 may be configured to transmit the other segmented MAC-ehs SDU, wherein the transmission sequence number is zero or wherein the transmission sequence number is a sequential number to a number of a transmission sequence number of the stored segmented MAC-ehs SDU in the CELL_FACH state.

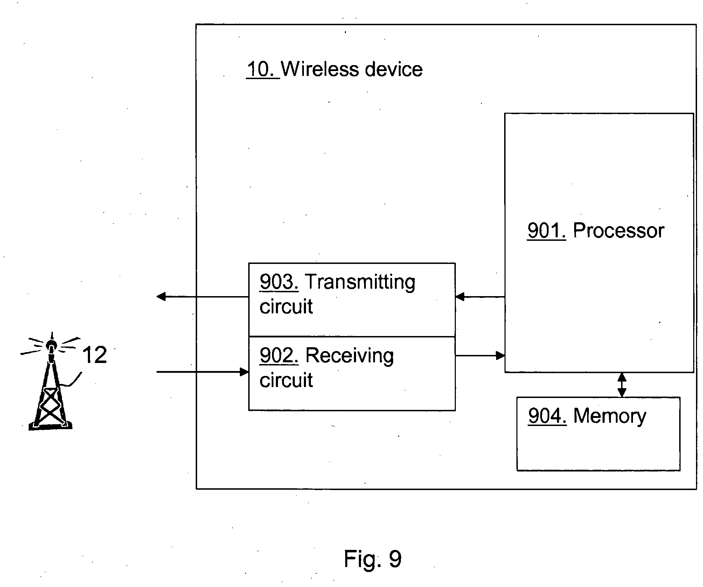

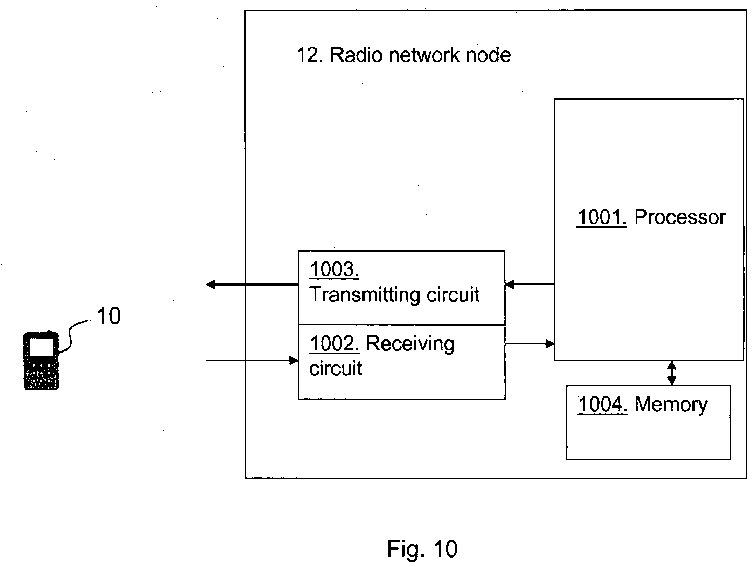

The embodiments herein for handling packets and/or switching states or enabling state change at the wireless device 10 may be implemented through **one or more processors 901** in the wireless device 10 depicted in **Fig. 9****,** or **one or more processors 1001,** also referred to as processing means, in the radio network node depicted in **Fig. 10****,** together with computer program code for performing the functions and/or method actions of the embodiments herein. The program code mentioned above may also be provided as a computer program product, for instance in the form of a data carrier carrying computer program code for performing embodiments herein when being loaded into the wireless device 10 and/or the radio network node 12. One such carrier may be in the form of a CD ROM disc. It is however feasible with other data carriers such as a memory stick. The computer program code may furthermore be provided as pure program code on a server and downloaded to the wireless device 10 and/or the radio network node 12.

The wireless device 10 comprises **a receiving circuit 902** and **a transmitting circuit 903.** Furthermore, the wireless device 10 comprises **a memory 904** configured to be used to store data on, such as complete and segmented MAC-ehs SDUs, TSN, applications to perform methods herein or similar.

The radio network node 12 comprises a **receiving circuit 1002** and **a transmitting circuit 1003.** Furthermore, the radio network node comprises **a memory 1004** configured to be used to store data on, such as complete and segmented MAC-ehs SDUs, TSN, applications to perform methods herein or similar.

As will be readily understood by those familiar with communications design, that modules and functions from other circuits may be implemented using digital logic and/or one or more microcontrollers, microprocessors, or other digital hardware. In some embodiments, several or all of the various modules or functions may be implemented together, such as in a single application-specific integrated circuit (ASIC), or in two or more separate devices with appropriate hardware and/or software interfaces between them. Several of the module or functions may be implemented on a processor shared with other functional components of a wireless terminal or network node, for example.

Alternatively, several of the functional elements of the processing circuits or means/module discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications receivers will appreciate the cost, performance, and maintenance tradeoffs inherent in these design choices. Transmitting modules or circuits may comprise a transmitter and similarly receiving module and circuits may comprise a receiver. These transmitting/receiving modules or circuits may further be implemented by e.g. transceivers.

Some embodiments herein provide a method in the radio network node 12 for handling packets towards the wireless device 10. The radio network node 12 keeps track on CELL_FACH partially sent MAC-ehs SDUs, also known as segmented MAC-ehs SDUs, and initiates transmissions on CELL_DCH with TSN=0 by retransmitting the at least partially sent the MAC-ehs SDU with e.g. a sequence number of 0.

According to some embodiments a method in the wireless device 10 is provided for handling data during a state change of the wireless device 10. The segmented MAC-ehs SDUs may be stored at the wireless device 10. The wireless device 10 may provide the full MAC-ehs SDU comprising the segmented MAC-ehs SDUs to MAC-ehs PDUs to higher layers during state change. The wireless device 10 may remove the stored segmented MAC-ehs SDUs after a reset indication from the radio network node 12.

Embodiments herein further provide the wireless device 10 and the radio network node 12 configured to perform the respective method.

Embodiments herein outline a number of different ideas to facilitate a seamless up-switch from CELL_FACH to CELL_DCH. It may be difficult to define modified behavior for early wireless device - releases already present in live networks without relying on a MAC-ehs reset procedure to align the MAC entities in wireless devices and NW. However, for later release wireless devices, it should be possible to mandate modified behavior without resorting to a MAC-ehs reset procedure. Note that in embodiments herein MAC-hs reset applies for MAC-ehs reset procedure. This convention has been taken to map the 3GPP convention which uses MAC-hs reset for both the MAC-hs and MAC-ehs procedure.

Consequently, some embodiments herein clarify the wireless device 10 and NW, i.e. radio network node 12, behavior when the Information element (IE) "MAC-hs reset indicator" is not included in the up-switch from CELL_FACH to CELL_DCH state and the MAC-ehs entity is used prior to the up-switch and after the up-switch and the serving cell is not changed. Embodiments herein also clarify the UE and NW behavior when the IE "MAC-hs reset indicator" is included in the up-switch from CELL_FACH to CELL_DCH and the MAC-ehs entity is used prior to the up-switch and after the up-switch and the serving cell is not change.

It will be appreciated that the foregoing description and the accompanying drawings represent non-limiting examples of the methods and apparatus taught herein. As such, the inventive apparatus and techniques taught herein are not limited by the foregoing description and accompanying drawings. Instead, the embodiments herein are limited only by the following claims.

## Claims

1. A method in a wireless device (10) for handling packets from a radio network node (12) in a radio communications network (1) providing a seamless transition of a switch from a CELL_FACH state of the wireless device (10) to a CELL_DCH state of the wireless device (10), comprising:
- *storing* (402) a segmented Medium Access Control-enhanced high speed Service Data Unit, MAC-ehs SDU, received from the radio network node (12) when the wireless device (10) is in the CELL_FACH state;
- *receiving* (404) another MAC-ehs SDU in an initial transmission when the wireless device (10) is in the CELL_DCH state; and
- *joining* (405) the stored segmented MAC-ehs SDU with the received other MAC-ehs SDU; or *discarding* (406) the stored segmented MAC-ehs SDU when the received other MAC-ehs SDU comprises a segmentation indication indicating the received other MAC-ehs SDU to be a beginning of a reordering protocol data unit, PDU, or a complete MAC-ehs SDU.

2. A method according to claim 1, wherein the received other MAC-ehs SDU is a segmented MAC-ehs SDU.

3. A method according to any of the claims 1-2, further comprising:
- *receiving* (401) one or more segmented MAC-ehs SDUs from the radio network node (12) in CELL_FACH state; and
- *providing* (403) the one or more received segmented MAC-ehs SDUs as a complete MAC-ehs SDU to a higher layer during the switch to the CELL_DCH state.

4. A method according to any of the claims 1-3, wherein *storing* (402) comprises retaining the segmented MAC-ehs SDU that cannot be delivered to a higher layer during the switch from the CELL_FACH state to the CELL_DCH state.

5. A method according to any of the claims 1-4, wherein the *joining* (405) the stored segmented MAC-ehs SDU with the received other MAC-ehs SDU is performed when a transmit sequence number of the received other MAC-ehs SDU is a sequential transmit sequence number of a transmit sequence number of the stored segmented MAC-ehs SDU.

6. A method according to any of the claims 1-4, wherein the *joining* (405) the stored segmented MAC-ehs SDU with the received other MAC-ehs SDU is performed when a transmit sequence number of the received other MAC-ehs SDU is zero.

7. A method in a radio network node (12) for handling packets towards a wireless device (10) in a radio communications network (1) providing a seamless transition of a switch from a CELL_FACH state of the wireless device (10) to a CELL_DCH state of the wireless device (10), comprising:
- *storing* (601) a segmented Medium Access Control-enhanced high speed Service Data Unit, MAC-ehs SDU, at least partially transmitted to the wireless device (10) in CELL_FACH state; and
- *retransmitting* (602) the stored segmented MAC-ehs SDU to the wireless terminal (10) in CELL_DCH state when a complete MAC-ehs SDU is partially transmitted to the wireless device (10) in CELL_FACH state, or *transmitting* (603) to the wireless terminal (10) in CELL_DCH state, another segmented MAC-ehs SDU remaining in a sequence of segmented MAC-ehs SDUs with a transmission sequence number.

8. A method according to claim 7, wherein the *transmitting* (603) the other segmented MAC-ehs SDU is performed and wherein the transmission sequence number is zero.

9. A method according to claim 7, wherein the *transmitting* (603) the other segmented MAC-ehs SDU is performed and wherein the transmission sequence number is a sequential number to a number of a transmission sequence number of the stored segmented MAC-ehs SDU in the CELL_FACH state.

10. A method according to claim 7, wherein the *retransmitting* (602) is performed after a MAC-ehs reset is sent to the wireless device.

11. A wireless device (10) for handling packets from a radio network node (12) in a radio communications network (1) providing a seamless transition of a switch from a CELL_FACH state of the wireless device (10) to a CELL_DCH state of the wireless device (10), wherein the wireless device (10) is configured to:
store a segmented Medium Access Control-enhanced high speed Service Data Unit, MAC-ehs SDU, received from the radio network node (12) when the wireless device (10) is in the CELL_FACH state;
receive another MAC-ehs SDU in an initial transmission when the wireless device (10) is in the CELL_DCH state; and
join the stored segmented MAC-ehs SDU with the received other MAC-ehs SDU; or discard the stored segmented MAC-ehs SDU when the received other MAC-ehs SDU comprises a segmentation indication indicating the received other MAC-ehs SDU to be a beginning of a reordering protocol data unit, PDU, or a complete MAC-ehs SDU.

12. A wireless device (10) according to claim 11, wherein the received other MAC-ehs SDU is a segmented MAC-ehs SDU.

13. A wireless device (10) according to any of claims 11-12, further being configured to:
receive one or more segmented MAC-ehs SDUs from the radio network node (12) in CELL_FACH state; and
provide the one or more received segmented MAC-ehs SDUs as a complete MAC-ehs SDU to a higher layer during the switch to the CELL_DCH state.

14. A wireless device (10) according to any of the claims 11-13, being configured to store the segmented MAC-ehs SDU that cannot be delivered to a higher layer during the switch from the CELL_FACH state to the CELL_DCH state.

15. A wireless device (10) according to any of the claims 11-14, being configured to join the stored segmented MAC-ehs SDU with the received other MAC-ehs SDU when a transmit sequence number of the received other MAC-ehs SDU is a sequential transmit sequence number of a transmit sequence number of the stored segmented MAC-ehs SDU.

16. A wireless device (10) according to any of the claims 11-14, being configured to join the stored segmented MAC-ehs SDU with the received other MAC-ehs SDU when a transmit sequence number of the received other MAC-ehs SDU is zero.

17. A radio network node (12) for handling packets towards a wireless device (10) in a radio communications network (1) to provide a seamless transition of a switch from a CELL_FACH state of the wireless device (10) to a CELL_DCH state of the wireless device (10), wherein the radio network node is configured to:
store a segmented Medium Access Control-enhanced high speed Service Data Unit, MAC-ehs SDU, at least partially transmitted to the wireless device (10) in CELL_FACH state; and
to retransmit the stored segmented MAC-ehs SDU to the wireless terminal (10) in CELL_DCH state when a complete MAC-ehs SDU is partially transmitted to the wireless device (10) in CELL_FACH state, or to transmit, to the wireless terminal (10) in CELL_DCH state, another segmented MAC-ehs SDU remaining in a sequence of segmented MAC-ehs SDUs with a transmission sequence number.

18. A radio network node (12) according to claim 17, being configured to transmit the other segmented MAC-ehs SDU, and wherein the transmission sequence number is zero.

19. A radio network node (12) according to claim 17, being configured to transmit the other segmented MAC-ehs SDU, and wherein the transmission sequence number is a sequential number to a number of a transmission sequence number of the stored segmented MAC-ehs SDU in the CELL_FACH state.

20. A radio network node (12) according to claim 17, being configured to retransmit the stored segmented MAC-ehs SDU after a MAC-ehs reset is sent to the wireless device.

21. Computer program, comprising instructions which, when executed on at least one processor, cause the at least one processor to carry out the method according to any one of claims 1 to 10.

22. A computer-readable storage medium, having stored thereon a computer program, comprising instructions which, when executed on at least one processor, cause the at least one processor to carry out the method according to any one of claims 1 to 10.

## Patentansprüche

1. Verfahren in einer drahtlosen Vorrichtung (10) zum Transport von Paketen aus einem Funknetzknoten (12) in einem Funkkommunikationsnetz (1), das einen nahtlosen Übergang beim Umschalten von einem CELL_FACH-Zustand der drahtlosen Vorrichtung (10) in einen CELL_DCH-Zustand der drahtlosen Vorrichtung (10) bereitstellt, umfassend:
- *Speichern* (402) einer segmentierten Highspeed-Servicedateneinheit mit verbesserter mittlerer Zugriffskontrolle (Medium Access Control enhanced high speed Service Data Unit), MAC-ehs-SDU, die von dem Funknetzknoten (12) empfangen wird, wenn die drahtlose Vorrichtung (10) im CELL_FACH-Zustand ist;
- *Empfangen* (404) einer anderen MAC-ehs-SDU bei einer ersten Übertragung, wenn sich die drahtlose Vorrichtung (10) im CELL_DCH-Zustand befindet; und
- *Verbinden* (405) der gespeicherten segmentierten MAC-ehs-SDU mit der empfangenen anderen MAC-ehs-SDU; oder *Verwerfen* (406) der gespeicherten segmentierten MAC-ehs-SDU, wenn die empfangene andere MAC-ehs-SDU eine Segmentierungsangabe umfasst, gemäß der die empfangene andere MAC-ehs-SDU ein Anfang einer Umordnungs-PDU (Protocol Data Unit) oder eine vollständige MAC-ehs-SDU ist.

2. Verfahren nach Anspruch 1, wobei die empfangene andere MAC-ehs-SDU eine segmentierte MAC-ehs-SDU ist.

3. Verfahren nach einem der Ansprüche 1 bis 2, ferner umfassend:
- *Empfangen* (401) einer oder mehrerer segmentierter MAC-ehs-SDUs aus dem Funknetzknoten (12) im CELL_FACH Zustand; und
- *Bereitstellen* (403) der einen oder mehreren empfangenen segmentierten MAC-ehs-SDUs als vollständige MAC-ehs-SDU für eine höhere Schicht während des Umschaltens in den CELL_DCH-Zustand.

4. Verfahren nach einem der Ansprüche 1 bis 3, wobei das *Speichern* (402) das Halten der segmentierten MAC-ehs-SDU umfasst, die während des Umschaltens vom CELL_FACH-Zustand in den CELL_DCH-Zustand nicht an eine höhere Schicht geliefert werden kann.

5. Verfahren nach einem der Ansprüche 1 bis 4, wobei das *Verbinden* (405) der gespeicherten segmentierten MAC-ehs-SDU mit der empfangenen anderen MAC-ehs-SDU erfolgt, wenn eine Sendefolgenummer der empfangenen anderen MAC-ehs-SDU eine laufende Sendefolgenummer einer Sendefolgenummer der gespeicherten segmentierten MAC-ehs-SDU ist.

6. Verfahren nach einem der Ansprüche 1 bis 4, wobei das *Verbinden* (405) der gespeicherten segmentierten MAC-ehs-SDU mit der empfangenen anderen MAC-ehs-SDU erfolgt, wenn eine Sendefolgenummer der empfangenen anderen MAC-ehs-SDU Null ist.

7. Verfahren in einem Funknetzknoten (12) zum Transport von Paketen zu einer drahtlosen Vorrichtung (10) in einem Funkkommunikationsnetz (1), das einen nahtlosen Übergang beim Umschalten von einem CELL_FACH-Zustand der drahtlosen Vorrichtung (10) in einen CELL_DCH-Zustand der drahtlosen Vorrichtung (10) bereitstellt, umfassend:
- *Speichern* (601) einer segmentierten Highspeed-Servicedateneinheit mit verbesserter mittlerer Zugriffskontrolle, MAC-ehs-SDU, die zumindest teilweise an die drahtlose Vorrichtung (10) im CELL_FACH-Zustand gesendet wird; und
- *Weitersenden* (602) der gespeicherten segmentierten MAC-ehs-SDU an die drahtlose Vorrichtung (10) im CELL_DCH-Zustand, wenn eine vollständige MAC-ehs-SDU teilweise an die drahtlose Vorrichtung (10) im CELL_FACH-Zustand gesendet wird, oder *Senden* (603) einer anderen segmentierten MAC-ehs-SDU, die in einer Folge segmentierter MAC-ehs-SDUS mit einer Sendefolgenummer gehalten wird, an die drahtlose Vorrichtung (10) im CELL-DCH-Zustand.

8. Verfahren nach Anspruch 7, wobei das *Senden* (603) der anderen segmentierten MAC-ehs-SDU erfolgt und wobei die Sendefolgenummer Null ist.

9. Verfahren nach Anspruch 7, wobei das *Senden* (603) der anderen segmentierten MAC-ehs-SDU erfolgt und wobei die Sendefolgenummer eine laufende Nummer bis zu einer Nummer einer Sendefolgenummer der gespeicherten segmentierten MAC-ehs-SDU im CELL_FACH-Zustand ist.

10. Verfahren nach Anspruch 7, wobei das *Weitersenden* (602) erfolgt, nachdem ein MAC-ehs-Reset an die drahtlose Vorrichtung gesendet wurde.

11. Drahtlose Vorrichtung (10) zum Transport von Paketen aus einem Funknetzknoten (12) in einem Funkkommunikationsnetz (1), das einen nahtlosen Übergang beim Umschalten von einem CELL_FACH-Zustand der drahtlosen Vorrichtung (10) in einen CELL_DCH-Zustand der drahtlosen Vorrichtung (10) bereitstellt, wobei die drahtlose Vorrichtung (10) so konfiguriert ist, dass sie:
eine segmentierte Highspeed-Servicedateneinheit mit verbesserter mittlerer Zugriffskontrolle, MAC-ehs-SDU, speichert, die vom Funknetzknoten (12) empfangen wird, wenn sich die drahtlose Vorrichtung (10) im CELL_FACH-Zustand befindet;
eine andere MAC-ehs-SDU bei einer ersten Übertragung empfängt, wenn sich die drahtlose Vorrichtung (10) im CELL_DCH-Zustand befindet; und
die gespeicherte segmentierte MAC-ehs-SDU mit der empfangenen anderen MAC-ehs-SDU verbindet; oder die gespeicherte segmentierte MAC-ehs-SDU verwirft, wenn die empfangene andere MAC-ehs-SDU eine Segmentierungsangabe umfasst, gemäß der die empfangene andere MAC-ehs-SDU ein Anfang einer Umordnungs-PDU (Protocol Data Unit) oder eine vollständige MAC-ehs-SDU ist.

12. Drahtlose Vorrichtung (10) nach Anspruch 11, wobei die empfangene andere MAC-ehs-SDU eine segmentierte MAC-ehs-SDU ist.

13. Drahtlose Vorrichtung (10) nach einem der Ansprüche 11 bis 12, die ferner konfiguriert ist, um:
eine oder mehrere segmentierte MAC-ehs-SDUs vom Funknetzknoten (12) im CELL_FACH-Zustand zu empfangen; und
die eine oder mehreren empfangenen MAC-ehs-SDUs als vollständige MAC-ehs-SDU für eine höhere Schicht während des Umschaltens in den CELL_DCH-Zustand bereitzustellen.

14. Drahtlose Vorrichtung (10) nach einem der Ansprüche 11 bis 13, die konfiguriert ist, um die segmentierte MAC-ehs-SDU zu speichern, die während des Schaltens vom CELL-FACH-Zustand in den CELL_DCH-Zustand nicht an eine höhere Schicht geliefert werden kann.

15. Drahtlose Vorrichtung (10) nach einem der Ansprüche 11 bis 14, die konfiguriert ist, um die gespeicherte segmentierte MAC-ehs-SDU mit der empfangenen anderen MAC-ehs-SDU zu verbinden, wenn eine Sendefolgenummer der empfangenen anderen MAC-ehs-SDU eine laufende Sendefolgenummer einer Sendefolgenummer der gespeicherten segmentierten MAC-ehs-SDU ist.

16. Drahtlose Vorrichtung (10) nach einem der Ansprüche 11 bis 14, die konfiguriert ist, um die gespeicherte segmentierte MAC-ehs-SDU mit der empfangenen anderen MAC-ehs-SDU zu verbinden, wenn eine Sendefolgenummer der empfangenen anderen MAC-ehs-SDU Null ist.

17. Funknetzknoten (12) zum Transport von Paketen zu einer drahtlosen Vorrichtung (10) in einem Funkkommunikationsnetz (1), um einen nahtlosen Übergang beim Umschalten von einem CELL_FACH-Zustand der drahtlosen Vorrichtung (10) in einen CELL_DCH-Zustand der drahtlosen Vorrichtung (10) bereitzustellen, wobei der Funknetzknoten konfiguriert ist zum:
Speichern einer segmentierten Highspeed-Servicedateneinheit mit verbesserter mittlerer Zugriffskontrolle, MAC-ehs-SDU, die zumindest teilweise an die drahtlose Vorrichtung (10) im CELL_FACH-Zustand gesendet wird; und
Weitersenden der gespeicherten segmentierten MAC-ehs-SDU an die drahtlose Vorrichtung (10) im CELL_DCH-Zustand, wenn eine vollständige MAC-ehs-SDU teilweise an die drahtlose Vorrichtung (10) im CELL_FACH-Zustand gesendet wird, oder zum Senden einer anderen segmentierten MAC-ehs-SDU, die in einer Folge segmentierter MAC-ehs-SDUS mit einer Sendefolgenummer gehalten wird, an die drahtlose Vorrichtung (10) im CELL-DCH-Zustand.

18. Funknetzknoten (12) nach Anspruch 17, der konfiguriert ist, um die andere segmentierte MAC-ehs-SDU zu senden, und wobei die Sendefolgenummer Null ist.

19. Funknetzknoten (12) nach Anspruch 17, der so konfiguriert wird, dass er die andere segmentierte MAC-ehs-SDU sendet, und wobei die Sendefolgenummer eine laufende Folgenummer bis zu einer Nummer einer Sendefolgenummer der gespeicherten segmentierten MAC-ehs-SDU im CELL_FACH-Zustand ist.

20. Funknetzknoten (12) nach Anspruch 17, der so konfiguriert ist, dass er die gespeicherte segmentierte MAC-ehs-SDU sendet, nachdem ein MAC-ehs-Reset an die drahtlose Vorrichtung gesendet worden ist.

21. Computerprogramm umfassend Anweisungen, die bei Ausführung auf mindestens einem Prozessor bewirken, dass der mindestens eine Prozessor das Verfahren nach einem der Ansprüche 1 bis 10 ausführt.

22. Computerlesbares Speichermedium, auf dem ein Computerprogramm gespeichert ist, umfassend Anweisungen, die bei Ausführung auf mindestens einem Prozessor bewirken, dass der mindestens eine Prozessor das Verfahren nach einem der Ansprüche 1 bis 10 ausführt.

## Revendications

1. Procédé dans un dispositif sans fil (10) pour la gestion de paquets depuis un noeud de réseau radio (12) dans un réseau de communications radio (1) fournissant une transition sans coupure d'une commutation d'un état CELL_FACH du dispositif sans fil (10) à un état CELL_DCH du dispositif sans fil (10), comprenant :
- le *stockage* (402) d'une unité de données de service à grande vitesse à contrôle d'accès au support amélioré, MAC-ehs SDU, segmentée reçue du noeud de réseau radio (12) lorsque le dispositif sans fil (10) est dans l'état CELL_FACH ;
- la *réception* (404) d'une autre MAC-ehs SDU dans une transmission initiale lorsque le dispositif sans fil (10) est dans l'état CELL_DCH ; et
- la *jonction* (405) de la MAC-ehs SDU segmentée stockée à l'autre MAC-ehs SDU reçue ; ou *le rejet* (406) de la MAC-ehs SDU segmentée stockée lorsque l'autre MAC-ehs SDU comprend une indication de segmentation indiquant que l'autre MAC-ehs SDU reçue est un début d'une unité de données de protocole, PDU, de réordonnancement ou une MAC-ehs SDU complète.

2. Procédé selon la revendication 1, dans lequel l'autre MAC-ehs SDU reçue est une MAC-ehs SDU segmentée.

3. Procédé selon l'une quelconque des revendications 1 à 2, comprenant en outre :
- la *réception* (401) d'une ou plusieurs MAC-ehs SDU segmentées depuis le noeud de réseau radio (12) dans un état CELL_FACH ; et
- la *fourniture* (403) de la ou des MAC-ehs SDU segmentées reçues en tant que MAC-ehs SDU complète à une couche supérieure pendant la commutation à l'état CELL_DCH.

4. Procédé selon l'une quelconque des revendications 1 à 3, dans lequel le *stockage* (402) comprend la rétention de la MAC-ehs SDU segmentée qui ne peut pas être distribuée à une couche supérieure pendant la commutation de l'état CELL_FACH à l'état CELL_DCH.

5. Procédé selon l'une quelconque des revendications 1 à 4, dans lequel la *jonction* (405) de la MAC-ehs SDU segmentée stockée à l'autre MAC-ehs SDU reçue est effectuée lorsqu'un numéro de séquence de transmission de l'autre MAC-ehs SDU reçue est un numéro séquentiel de séquence de transmission d'un numéro de séquence de transmission de la MAC-ehs SDU segmentée stockée.

6. Procédé selon l'une quelconque des revendications 1 à 4, dans lequel la *jonction* (405) de la MAC-ehs SDU segmentée stockée avec l'autre MAC-ehs SDU reçue est effectuée lorsqu'un numéro de séquence de transmission de l'autre MAC-ehs SDU reçue est égal à zéro.

7. Procédé dans un noeud de réseau radio (12) pour la gestion de paquets en direction d'un dispositif sans fil (10) dans un réseau de communications radio (1) fournissant une transition sans coupure d'une commutation d'un état CELL_FACH du dispositif sans fil (10) à un état CELL_DCH du dispositif sans fil (10), comprenant :
- le *stockage* (601) d'une unité de données de service à grande vitesse à contrôle d'accès au support amélioré, MAC-ehs SDU, segmentée au moins partiellement transmise au dispositif sans fil (10) dans un état CELL_FACH ; et
- la *retransmission* (602) de la MAC-ehs SDU segmentée stockée au terminal sans fil (10) dans un état CELL_DCH lorsqu'une MAC-ehs SDU complète est partiellement transmise au dispositif sans fil (10) dans un état CELL_FACH, ou la *transmission* (603) au terminal sans fil (10) dans un état CELL_DCH, d'une autre MAC-ehs SDU segmentée restant dans une séquence de MAC-ehs SDU segmentées avec un numéro de séquence de transmission.

8. Procédé selon la revendication 7, dans lequel la *transmission* (603) de l'autre MAC-ehs SDU segmentée est effectuée et dans lequel le numéro de séquence de transmission est égal à zéro.

9. Procédé selon la revendication 7, dans lequel la *transmission* (603) de l'autre MAC-ehs SDU segmentée est effectuée et dans lequel le numéro de séquence de transmission est un numéro séquentiel jusqu'à un numéro d'un numéro de séquence de transmission de la MAC-ehs SDU segmentée stockée dans l'état CELL_FACH.

10. Procédé selon la revendication 7, dans lequel la *retransmission* (602) est effectuée après qu'une réinitialisation de MAC-ehs est envoyée au dispositif sans fil.

11. Dispositif sans fil (10) pour la gestion de paquets depuis un noeud de réseau radio (12) dans un réseau de communications radio (1) fournissant une transition sans coupure d'une commutation d'un état CELL_FACH du dispositif sans fil (10) à un état CELL_DCH du dispositif sans fil (10), dans lequel le dispositif sans fil (10) est configuré pour :
stocker une unité de données de service à grande vitesse à contrôle d'accès au support amélioré, MAC-ehs SDU, segmentée reçue du noeud de réseau radio (12) lorsque le dispositif sans fil (10) est dans l'état CELL_FACH ;
recevoir une autre MAC-ehs SDU dans une transmission initiale lorsque le dispositif sans fil (10) est dans l'état CELL_DCH ; et
joindre la MAC-ehs SDU segmentée stockée à l'autre MAC-ehs SDU reçue ; ou rejeter la MAC-ehs SDU segmentée stockée lorsque l'autre MAC-ehs SDU comprend une indication de segmentation indiquant que l'autre MAC-ehs SDU reçue est un début d'une unité de données de protocole, PDU, de réordonnancement ou une MAC-ehs SDU complète.

12. Dispositif sans fil (10) selon la revendication 11, dans lequel l'autre MAC-ehs SDU reçue est une MAC-ehs SDU segmentée.

13. Dispositif sans fil (10) selon l'une quelconque des revendications 11 à 12, étant en outre configuré pour :
recevoir une ou plusieurs MAC-ehs SDU segmentées depuis le noeud de réseau radio (12) dans un état CELL_FACH ; et
fournir la ou les MAC-ehs SDU segmentées reçues en tant que MAC-ehs SDU complète à une couche supérieure pendant la commutation à l'état CELL_DCH.

14. Dispositif sans fil (10) selon l'une quelconque des revendications 11 à 13, étant configuré pour stocker la MAC-ehs SDU segmentée qui ne peut pas être distribuée à une couche supérieure pendant la commutation de l'état CELL_FACH à l'état CELL_DCH.

15. Dispositif sans fil (10) selon l'une quelconque des revendications 11 à 14, étant configuré pour joindre la MAC-ehs SDU segmentée stockée à l'autre MAC-ehs SDU reçue lorsqu'un numéro de séquence de transmission de l'autre MAC-ehs SDU reçue est un numéro séquentiel de séquence de transmission d'un numéro de séquence de transmission de la MAC-ehs SDU segmentée stockée.

16. Dispositif sans fil (10) selon l'une quelconque des revendications 11 à 14, étant configuré pour joindre la MAC-ehs SDU segmentée stockée à l'autre MAC-ehs SDU reçue lorsqu'un numéro de séquence de transmission de l'autre MAC-ehs SDU reçue est égal à zéro.

17. Noeud de réseau radio (12) pour la gestion de paquets en direction d'un dispositif sans fil (10) dans un réseau de communications radio (1) pour fournir une transition sans coupure d'une commutation d'un état CELL_FACH du dispositif sans fil (10) à un état CELL_DCH du dispositif sans fil (10), dans lequel le noeud de réseau radio est configuré pour :
stocker une unité de données de service à grande vitesse à contrôle d'accès au support amélioré, MAC-ehs SDU, segmentée au moins partiellement transmise au dispositif sans fil (10) dans un état CELL_FACH ; et
retransmettre la MAC-ehs SDU segmentée stockée au terminal sans fil (10) dans un état CELL_DCH lorsqu'une MAC-ehs SDU complète est partiellement transmise au dispositif sans fil (10) dans un état CELL_FACH, ou transmettre au terminal sans fil (10) dans un état CELL_DCH, une autre MAC-ehs SDU segmentée restant dans une séquence de MAC-ehs SDU segmentées avec un numéro de séquence de transmission.

18. Noeud de réseau radio (12) selon la revendication 17, étant configuré pour transmettre l'autre MAC-ehs SDU segmentée, et dans lequel le numéro de séquence de transmission est égal à zéro.

19. Noeud de réseau radio (12) selon la revendication 17, étant configuré pour transmettre l'autre MAC-ehs SDU segmentée, et dans lequel le numéro de séquence de transmission est un numéro séquentiel jusqu'à un numéro d'un numéro de séquence de transmission de la MAC-ehs SDU segmentée stockée dans l'état CELL_FACH.

20. Noeud de réseau radio (12) selon la revendication 17, étant configuré pour retransmettre la MAC-ehs SDU segmentée stockée après qu'une réinitialisation de MAC-ehs est envoyée au dispositif sans fil.

21. Programme d'ordinateur, comprenant des instructions qui, lorsqu'elles sont exécutées sur au moins un processeur, amènent ledit au moins un processeur à effectuer le procédé selon l'une quelconque des revendications 1 à 10.

22. Support de stockage lisible par un ordinateur, sur lequel est stocké un programme d'ordinateur, comprenant des instructions qui, lorsqu'elles sont exécutées sur au moins un processeur, amènent ledit au moins un processeur à effectuer le procédé selon l'une quelconque des revendications 1 à 10.
